# DEMANDE DE BREVET EUROPEEN

(11) **EP 3 187 406 A1**
(43) Date de publication de la demande: **05.07.2017**
(21) Numéro de dépôt: 16201562.2
(22) Date de dépôt: 30.11.2016
(51) Int. Cl.: B62K 25/02

(54) **PATTE DE BRAS ARRIÈRE D'UNE BICYCLETTE OU ANALOGUE ET BICYCLETTE COMPORTANT UNE TELLE PATTE DE BRAS ARRIÈRE**

(30) Priorité: 31.12.2015 FR 1563482
(71) Demandeur: Cycles Lapierre, 21000 Dijon (FR)
(72) Inventeur: LAYES, Hervé, 21000 DIJON (FR)
(74) Mandataire: Gevers SA

(57) **Abrégé**

La présente invention concerne une patte de bras arrière d'un véhicule tel qu'une bicyclette ou analogue remarquable en ce que l'extrémité distale du bras arrière (10) comporte au moins un évidement (15) pratiqué sur la paroi extérieure ou intérieure dudit bras arrière (10), un jour (16) de forme sensiblement oblongue pratiqué dans le fond dudit évidement (15) et débouchant sur la paroi intérieure ou extérieure dudit bras (10) respectivement, une pièce dite adaptateur (17) de forme complémentaire à la forme de l'évidement (15) et comportant au moins un trou taraudé (18) excentré par rapport au plan médian dudit adaptateur (17) de manière à ce que la position du trou taraudé (18) par rapport au cadre peut être modifiée en positionnant ledit adaptateur (17) dans un sens ou dans l'autre dans l'évidement (15).

## Description

La présente invention se rapporte à une patte de bras arrière d'une bicyclette, tel qu'un VTT ou un VTT à assistance électrique par exemple, permettant d'adapter aisément et rapidement la position de l'axe de la roue arrière en fonction de la hauteur du flanc du pneumatique monté sur la jante arrière, et à une bicyclette comportant une telle patte de bras arrière.

Dans le domaine du vélo, il est bien connu des systèmes de fixation de la roue comportant une attache rapide solidaire des extrémités du moyeu de la roue, lesdites extrémités du moyeu étant aptes à être insérées dans des pattes en forme générale de U s'étendant à l'extrémité de la fourche ou du bras arrière du vélo. En outre, la patte arrière permet généralement la connexion de l'étrier de frein arrière.

Usuellement, les dimensions et la forme de la patte arrière sont conçues pour recevoir un axe de roue spécifique de la gamme des différents axes de roues disponibles sur le marché et/ou pour recevoir une roue spécifique, c'est-à-dire une jante sur laquelle est monté un pneumatique, spécifique de la gamme des différentes roues disponibles sur le marché.

De nombreux systèmes ont déjà été imaginés pour permettre, pour un même cadre de vélo, de recevoir différents diamètres d'axe de roues et/ou de permettre un réglage de la tension de la chaîne et/ou de recevoir des roues de différents diamètres. C'est le cas notamment des demandes de brevet US 2014/0049020, EP 2557029 et US 2015/145231.

Le document US 2014/0049020 décrit un insert pour bicyclette comportant une partie centrale et une partie périphérique contigüe pour former un corps unitaire allongé, de forme sensiblement rectangulaire ou oblong, la partie périphérique formant un rebord. Ledit corps comprend une première surface extérieure définie par la partie centrale et une seconde surface extérieure opposée définie par la partie centrale et la partie périphérique. Ladite partie centrale comprend un trou traversant excentré par rapport au plan de symétrie du corps qui est apte à être introduit dans un trou pratiqué sur le bras de la bicyclette, la partie périphérique du corps prenant appui sur le bord dudit trou pratiqué dans le bras.

Le document EP 2557029 décrit un cadre de bicyclette comprenant un corps principal et deux pièces dites d'insertion, chaque pièce d'insertion comprenant un trou traversant apte à recevoir un axe de roue de forme et/ou de taille différente afin de permettre le montage de deux roues arrières différentes.

Le document US 2015/145231 décrit une bicyclette comprenant un cadre qui est spécifiquement conçu pour accueillir différentes configurations d'axe. La bicyclette comporte une roue comprenant un axe de roue et un cadre de bicyclette comprenant un support de roue incluant une ouverture d'axe ayant une première largeur et une fente dite d'axe contiguë avec l'ouverture d'axe et ayant une seconde largeur inférieure à la première largeur. Une partie de l'axe de roue disposée dans l'ouverture d'axe a un diamètre qui correspond sensiblement à la première largeur. Pour changer la roue d'origine par une roue dite de remplacement ayant un moyeu de remplacement qui a un axe de remplacement, ladite roue d'origine est retirée, une pièce dite convertisseur est positionnée dans l'ouverture d'axe, puis l'axe de remplacement est glissé à travers la fente de l'essieu et dans la zone de réception définie par le convertisseur.

Tous ces systèmes ne permettent pas de remplacer rapidement et aisément une roue d'un premier diamètre par une roue d'un second diamètre, plus précisément une roue présentant une jante de même diamètre mais un pneu dont la hauteur de flanc est différente, avec une patte de dérailleur positionnée correctement.

L'un des buts de l'invention est donc de remédier à ces inconvénients en proposant un de bras arrière de bicyclette ou similaire de conception simple et peu onéreuse, permettant la mise en place de roues de différents diamètres.

A cet effet et conformément à l'invention, il est proposé une patte de bras arrière d'un véhicule tel qu'une bicyclette, une moto ou analogue, du type comportant au moins un châssis dit cadre et au moins un bras arrière portant l'axe du moyeu d'une roue motrice, l'extrémité distale du bras arrière comportant au moins un évidement pratiqué sur la paroi extérieure du bras, c'est-à-dire la paroi du bras s'étendant à l'opposée de la paroi dite intérieure qui fait droit au plan sagittal du cadre, ou sur la paroi intérieure dudit bras arrière, un jour de forme sensiblement oblongue pratiqué dans le fond dudit évidement et débouchant sur la paroi intérieure dudit bras ou sur la paroi extérieure dudit bras respectivement, une pièce dite adaptateur de forme complémentaire à la forme de l'évidement, apte à être positionnée dans ledit évidement en prenant appui sur le fond ; ladite patte est remarquable en ce que l'adaptateur comporte au moins un trou taraudé excentré par rapport au plan médian dudit adaptateur, ledit trou taraudé étant destiné à recevoir le filetage de l'axe du moyeu de la roue arrière, de manière à ce que la position du trou taraudé par rapport au cadre peut être modifiée en positionnant ledit adaptateur dans un sens ou dans l'autre dans l'évidement afin d'adapter la position du trou en fonction de la hauteur de flanc de la roue arrière.

On comprend bien que, contrairement aux systèmes de l'art antérieur, lors du changement de roues présentant des diamètres différent, il suffit de retirer la roue, puis de retourner l'adaptateur et finalement de replacer la roue.

Par ailleurs, ladite patte de bras arrière comprend des moyens de fixation pour solidariser ledit adaptateur au bras arrière.

Lesdits moyens de fixation consistent en au moins deux trous traversant pratiqués dans le fond de l'évidement et au moins deux trous traversant pratiqués dans l'adaptateur et aptes à recevoir des douilles taraudées destinées à coopérer avec des vis traversant deux trous parmi trois trous traversant pratiqués dans une patte de dérailleur.

Accessoirement, les bords des trous traversant comportent un chanfrein afin d'éviter que les têtes des douilles taraudées ne fassent saillie de l'adaptateur.

Par ailleurs, l'évidement et l'adaptateur présentent une forme polygonale et, de préférence, une forme trapézoïdale.

De plus, la patte de bras arrière comporte un second adaptateur constitué d'une pièce comportant un trou traversant excentré par rapport au plan médian dudit adaptateur, ledit trou étant apte à recevoir l'axe du moyeu de la roue arrière, et un second évidement pratiqué sur la paroi extérieure d'un second bras arrière, c'est-à-dire la paroi du second bras arrière s'étendant à l'opposée de la paroi dite intérieure qui fait droit au plan sagittal du cadre, ou sur la paroi intérieure dudit second bras arrière, un jour de forme sensiblement oblongue pratiqué dans le fond dudit évidement et débouchant sur la paroi intérieure dudit second bras ou sur la paroi extérieure dudit second bras respectivement.

La distance entre le centre du trou traversant du second adaptateur et le plan médian dudit second adaptateur est égale à la distance entre le centre du trou taraudé du premier adaptateur et le plan médian dudit premier adaptateur.

Le second adaptateur et le second évidement recevant ledit second adaptateur présentent une forme polygonale et, de préférence, une forme rectangulaire.

De plus, elle comprend des moyens de fixation pour solidariser ledit second adaptateur au second bras arrière.

Lesdits moyens de fixation consistent en au moins deux trous taraudés pratiqués dans le fond du second évidement et au moins deux trous traversant pratiqués dans le second adaptateur et aptes à recevoir des vis destinées à coopérer avec lesdits trous taraudés.

Accessoirement, les bords des trous traversant comportent un chanfrein afin d'éviter que les têtes des vis ne fassent saillie du second adaptateur.

Un autre objet de l'invention concerne un bras arrière destiné à un véhicule tel qu'une bicyclette, une moto ou analogue, comprenant au moins une patte de bras arrière selon l'invention.

Un dernier objet de l'invention, concerne un cadre de bicyclette ou analogue comportant au moins un tube de selle, un tube de selle, au moins un bras arrière apte à porter une roue dite motrice et au moins une patte de bras arrière selon l'invention.

D'autres avantages et caractéristiques ressortiront mieux de la description qui va suivre, d'une unique variante d'exécution, donnée à titre d'exemple non limitatif, de la patte de bras arrière suivant l'invention, à partir des dessins annexés sur lesquels :
- la figure 1 est une vue de côté d'une bicyclette du type à assistance électrique comportant une patte de bras arrière conforme à l'invention,
- la figure 2 est une vue en perspective d'une patte de bras arrière conforme à l'invention,
- la figure 3 est une autre vue en perspective de la patte de bras arrière conforme à l'invention,
- la figure 4 est une vue en perspective éclatée de la patte arrière de bras arrière conforme à l'invention.

On décrira ci-après une patte de bras arrière suivant l'invention pour un vélo tout terrain, dit VTT, à point de pivot virtuel et à assistance électrique ; toutefois, il est bien évident que la patte de bras arrière pourrait être utilisé pour tout type de bicyclette à assistance électrique ou non sans pour autant sortir du cadre de l'invention.

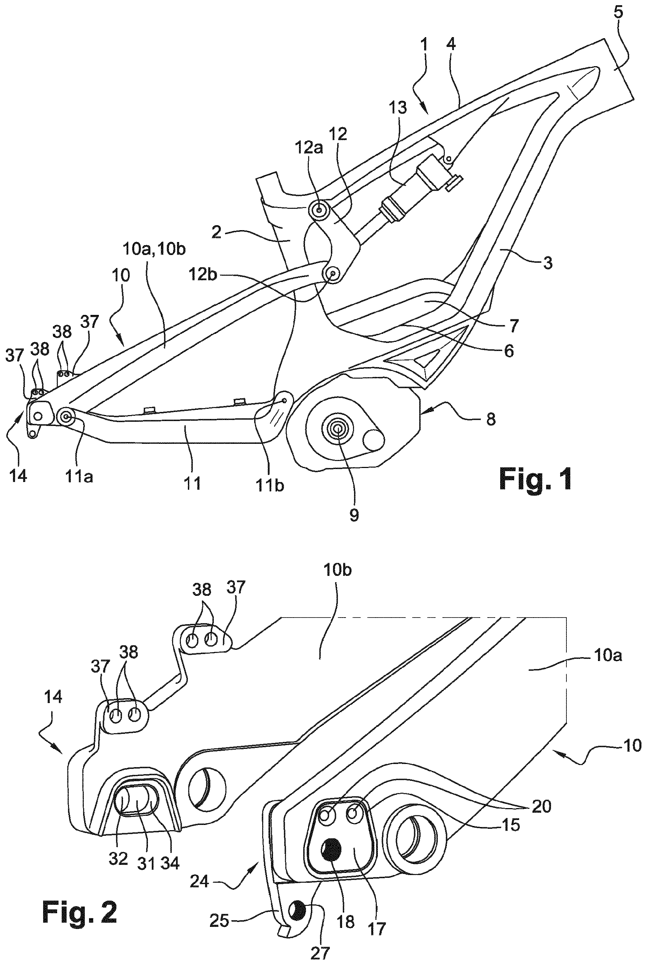

En référence à la figure 1, le cadre 1 de vélo suivant l'invention présente une forme triangulé et est constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement à un tube de fourche 5 globalement vertical, le tube oblique 3 étant, par ailleurs, solidarisé audit tube de fourche 5 également par soudage. Ce tube de fourche 5 reçoit une fourche de type télescopique, non représentée sur la figure 1, portant à son extrémité inférieure l'axe du moyeu de la roue avant du VTT. Un guidon est de manière classique solidarisé à l'extrémité distale d'une potence solidaire de l'extrémité supérieure de la fourche pour assurer la direction du VTT, le guidon et la potence n'étant également pas représentés sur la figure 1. De plus, le tube de selle 2 est apte à recevoir une tige de selle, non représentée sur la figure 1, comprenant à son extrémité supérieure une selle sur laquelle prend position le cycliste.

Il va de soi que les différents tubes de selle 2, oblique 3, horizontal 4 et de fourche 5 du cadre 1 peuvent être assemblés par tout moyen approprié bien connu de l'homme du métier tel que par collage et/ou par emboîtement par exemple sans pour autant sortir du cadre de l'invention.

L'extrémité inférieure dudit tube de selle 2, c'est-à-dire l'intersection du tube oblique 3 et dudit tube de selle 2, comporte une plateforme 6 sensiblement horizontale recevant sur sa face supérieure une batterie 7 alimentant un moteur électrique 8 positionné sous ladite plateforme et en prise avec un boitier de pédalier 9 portant de manière classique l'axe des pignons menant, non représentés sur la figure 1, communément appelés plateaux dont les axes de rotation sont coaxiaux. Des pédales, non représentées sur la figure 1, sont solidaires de l'axe des pignons menant de part et d'autre du cadre 1 du VTT.

Ledit VTT comporte, par ailleurs, un bras oscillant 10 constitué de deux haubans 10a,10b s'étendant de part et d'autre du plan médian du cadre 1, lesdits haubans 10a,10b étant reliés par une ou plusieurs entretoises non représentées sur la figure 1.

Ledit bras oscillant 10 est solidarisé au cadre 1 par deux moyens d'articulation 11 et 12. Le premier moyen d'articulation dit inférieur 11 consiste en une biellette dite inférieure dont les axes de rotation 11a et 11b positionnés aux extrémités libres de ladite biellette 11 sont respectivement articulés à l'extrémité distale du bras oscillant 10 et au tube de selle 2 au niveau de la plateforme 6, à proximité du boitier de pédalier 9. Cette biellette inférieure 11 s'étend globalement horizontalement à l'arrière du tube de selle 2 du cadre 1 du VTT lorsque ce dernier est en position d'équilibre statique, c'est-à-dire lorsqu'un cycliste de poids moyen prend position sur la selle du VTT. Le second moyen d'articulation dit supérieur 12 consiste en une biellette dite supérieure 12 dont les axes 12a et 12b sont articulés à l'extrémité proximale du bras oscillant 10 et respectivement au tube horizontal 4 à proximité du tube de selle 2 du cadre 1. Cette biellette supérieure 12 s'étend globalement verticalement entre le tube de selle 2 et le tube oblique, en dessous du tube horizontal 4, du cadre 1 du VTT lorsque ce dernier est en position d'équilibre statique. De plus, le VTT comprend un amortisseur 13 dont les extrémités libres sont solidaires respectivement du tube horizontal 4 et de la biellette supérieure 12.

Il est bien évident que l'amortisseur 13 pourra être solidaire du tube oblique sans pour autant sortir du cadre de l'invention. Par ailleurs, il est bien évident que le bras oscillant 10 pourra présenter une forme quelconque telle qu'une forme triangulaire par exemple et que le bras oscillant pourra être substitué par un bras rigide, non articulé au cadre, pour former un vélo dit rigide et non un vélo du type tout suspendu sans pour autant sortir du cadre de l'invention.

En référence aux figures 1 à 4, le bras oscillant 10 comporte à son extrémité distale, c'est-à-dire l'extrémité du bras 10 située la plus en arrière du vélo, une patte de bras arrière 14 apte à porter l'axe du moyeu de la roue arrière motrice du vélo, non représentée sur les figures.

La patte de bras arrière 14 comporte, au niveau du premier hauban 10a, un évidement 15 pratiqué sur la paroi extérieure du premier hauban 10a, c'est-à-dire la paroi du hauban 10a s'étendant à l'opposée de la paroi dite intérieure qui fait droit au plan sagittal du cadre 1, un jour 16 de forme sensiblement oblongue pratiqué dans le fond dudit évidement 15 et débouchant sur la paroi intérieure dudit hauban 10a, une pièce 17 dite adaptateur de forme complémentaire à la forme de l'évidement 15, apte à être positionnée dans ledit évidement 15 en prenant appui sur le fond, et comportant au moins un trou taraudé 18 excentré par rapport au plan médian dudit adaptateur 17, ledit trou taraudé 18 étant destiné à recevoir le filetage de l'axe du moyeu de la roue arrière. Dans cet exemple particulier de réalisation, l'évidement et l'adaptateur présentent une forme trapézoïdale ; toutefois, il est bien évident que l'évidement et l'adaptateur pourront présenter une forme quelconque telle qu'une forme oblongue ou polygonale sans pour autant sortir du cadre de l'invention.

Par ailleurs, ladite patte de bras arrière 14 comprend des moyens de fixation pour solidariser ledit adaptateur 17 au bras arrière 10. Lesdits moyens de fixation consistent en deux trous traversant 19 pratiqués dans le fond de l'évidement 15 et deux trous traversant 20 pratiqués dans l'adaptateur 17 et aptes à recevoir des douilles taraudées 21, c'est-à-dire des douilles comportant un taraudage interne, destinées à coopérer avec des vis 22 traversant deux trous parmi trois trous 23 traversant pratiqués dans une patte de dérailleur 24. Accessoirement, les bords des trous traversant 20 de l'adaptateur 17 comportent un chanfrein afin d'éviter que les têtes des douilles taraudées 21 ne fassent saillie dudit adaptateur 17.

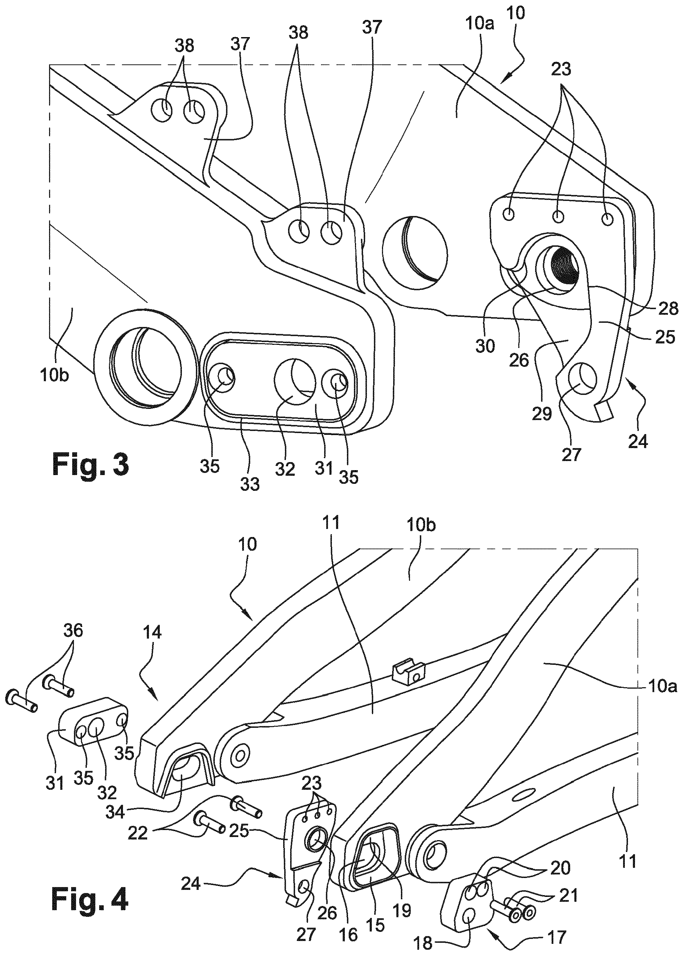

En référence aux figures 3 et 4, ladite patte de dérailleur 24 comprend un corps 25 en forme générale de triangle rectangle comportant un premier trou dit supérieur 26 apte à recevoir l'extrémité du moyeu de la roue arrière et un second trou dit inférieur 27 formant un oeillet de couplage, ledit corps 25 comportant au niveau du trou supérieur 26 un évidement 28 débouchant sur l'un des côtés du corps 25 et formant une paroi de fond 29 sensiblement perpendiculaire à l'axe du trou supérieur 26 et une paroi latérale 30 s'étendant parallèlement à l'axe du trou supérieur 26. Au dessus du trou supérieur 26, le corps 25 comporte trois trous 23 alignés et équidistants, lesdits trous 23 étant aptes à recevoir deux vis 22 coopérant avec les douilles taraudées 21 comme on l'a vu précédemment. Ladite patte de dérailleur peut consister par exemple dans la patte de dérailleur décrite dans la demande de brevet français FR de la demanderesse ; Toutefois, il est bien évident que la patte de dérailleur pourra consister dans toute autre patte de dérailleur bien connu de l'homme du métier sans pour autant sortir du cadre de l'invention.

De plus, en référence aux figures 2 à 4, la patte de bras arrière 14 comporte un second adaptateur 31 constitué d'une pièce comportant un trou traversant 32 excentré par rapport au plan médian dudit adaptateur 31, ledit trou 32 étant apte à recevoir l'axe du moyeu de la roue arrière, un second évidement 33 pratiqué sur la paroi extérieure d'un second bras arrière 10b, c'est-à-dire la paroi du second bras arrière 10b s'étendant à l'opposée de la paroi dite intérieure qui fait droit au plan sagittal du cadre, et un jour 34 de forme sensiblement oblongue pratiqué dans le fond dudit évidement 33 et débouchant sur la paroi intérieure dudit second bras arrière 10b.

La distance entre le centre du trou traversant 32 du second adaptateur 31 et le plan médian dudit second adaptateur 32 est égale à la distance entre le centre du trou taraudé 18 du premier adaptateur 17 et le plan médian dudit premier adaptateur 17.

Dans cet exemple de réalisation, le second adaptateur 31 et le second évidement 33 recevant ledit second adaptateur 31 présentent une forme polygonale et, de préférence, une forme rectangulaire ; toutefois, il va de soi que ledit second adaptateur 31 et l'évidement 33 le recevant pourront présenter une forme quelconque sans pour autant sortir du cadre de l'invention.

Par ailleurs, des moyens de fixation sont prévus pour solidariser ledit second adaptateur 31 au second bras arrière 10b. Lesdits moyens de fixation consistent en deux trous taraudés pratiqués dans le fond du second évidement 32, lesdits trous taraudés n'étant pas visibles sur les figures, et deux trous traversant 35 pratiqués dans le second adaptateur 31 et aptes à recevoir des vis 36 destinées à coopérer avec lesdits trous taraudés. Accessoirement, les bords des trous traversant 35 comportent un chanfrein afin d'éviter que les têtes des vis 36 ne fassent saillie du second adaptateur 31.

Par ailleurs, en référence aux figures 1 à 3, le second bras arrière 10b comportent sur sa paroi supérieure deux pattes verticales 37 dans lesquelles sont pratiquées respectivement deux trous traversant 38, chaque trou correspondant à une position spécifique de l'axe du moyeu de la roue arrière, pour permettre la fixation d'un étrier d'un frein à disque, le disque de frein étant solidaire du moyeu de la roue arrière.

On comprend bien que la patte de bras arrière suivant l'invention permet d'adapter aisément et rapidement la position de l'axe du moyeu de la roue arrière. A cet effet, il suffit de retourner les premier 17 et second 31 adaptateur en les faisant pivoter autour d'un axe vertical et d'adapter la position de la patte de dérailleur 24 sur le premier adaptateur 17, l'adaptation de la position de la patte de dérailleur 24 sur le premier adaptateur se faisant simultanément à la fixation dudit premier adaptateur dans son évidement 15.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Patte de bras arrière d'un véhicule tel qu'une bicyclette, une moto ou analogue, du type comportant au moins un châssis dit cadre (1) et au moins un bras arrière (10) portant l'axe du moyeu d'une roue motrice, l'extrémité distale du bras arrière (10) comportant au moins un évidement (15) pratiqué sur la paroi extérieure du bras (10), c'est-à-dire la paroi du bras s'étendant à l'opposée de la paroi dite intérieure qui fait droit au plan sagittal du cadre (1), ou sur la paroi intérieure dudit bras arrière (10), un jour (16) de forme sensiblement oblongue pratiqué dans le fond dudit évidement (15) et débouchant sur la paroi intérieure dudit bras (10) ou sur la paroi extérieure dudit bras (10) respectivement, une pièce dite adaptateur (17) de forme complémentaire à la forme de l'évidement (15), apte à être positionnée dans ledit évidement (15) en prenant appui sur le fond, **caractérisée en ce que** l'adaptateur (17) comporte au moins un trou taraudé (18) excentré par rapport au plan médian dudit adaptateur (17), ledit trou taraudé (18) étant destiné à recevoir le filetage de l'axe du moyeu de la roue arrière, de manière à ce que la position du trou taraudé (18) par rapport au cadre peut être modifiée en positionnant ledit adaptateur (17) dans un sens ou dans l'autre dans l'évidement (15) afin d'adapter la position du trou en fonction de la hauteur de flanc de la roue arrière.

2. Patte de bras arrière suivant la revendication 1 **caractérisée en ce qu'**il comprend des moyens de fixation pour solidariser ledit adaptateur (17) au bras arrière (10).

3. Patte de bras arrière suivant la revendication 2 **caractérisée en ce que** lesdits moyens de fixation consistent en au moins deux trous traversant (19) pratiqués dans le fond de l'évidement (15) et au moins deux trous traversant (20) pratiqués dans l'adaptateur (17) et aptes à recevoir des douilles taraudées (21) destinées à coopérer avec des vis (22) traversant deux trous parmi trois trous (23) traversant pratiqués dans une patte de dérailleur (24).

4. Patte de bras arrière suivant la revendication 3 **caractérisée en ce que** les bords des trous traversant (20,23) comportent un chanfrein.

5. Patte de bras arrière suivant l'une quelconque des revendications 1 à 4 **caractérisée en ce que** l'évidement (15) et l'adaptateur (17) présentent une forme polygonale.

6. Patte de bras arrière suivant la revendication 5 **caractérisée en ce que** l'évidement (15) et l'adaptateur (17) présentent une forme trapézoïdale.

7. Patte de bras arrière suivant l'une quelconque des revendications 1 à 6 **caractérisée en ce qu'**elle comporte un second adaptateur (31) constitué d'une pièce comportant un trou traversant (32) excentré par rapport au plan médian dudit adaptateur (31), ledit trou (32) étant apte à recevoir l'axe du moyeu de la roue arrière, et un second évidement (33) pratiqué sur la paroi extérieure d'un second bras arrière (10b), c'est-à-dire la paroi du second bras arrière (10b) s'étendant à l'opposée de la paroi dite intérieure qui fait droit au plan sagittal du cadre (1), ou sur la paroi intérieure dudit second bras arrière (10b), un jour (34) de forme sensiblement oblongue pratiqué dans le fond dudit évidement (33) et débouchant sur la paroi intérieure dudit second bras (10b) ou sur la paroi extérieure dudit second bras (10b) respectivement.

8. Patte de bras arrière suivant la revendication 7 **caractérisée en ce que** la distance entre le centre du trou traversant (32) du second adaptateur (31) et le plan médian dudit second adaptateur (32) est égale à la distance entre le centre du trou taraudé (18) du premier adaptateur (17) et le plan médian dudit premier adaptateur (17).

9. Patte de bras arrière suivant l'une quelconque des revendications 7 ou 8 **caractérisée en ce que** le second adaptateur (31) et le second évidement (33) recevant ledit second adaptateur (31) présentent une forme polygonale.

10. Patte de bras arrière suivant la revendication 9 **caractérisée en ce que** le second adaptateur (31) et le second évidement (33) présentent une forme rectangulaire.

11. Patte de bras arrière suivant l'une quelconque des revendications 7 à 10 **caractérisée en ce qu'**elle comprend des moyens de fixation pour solidariser ledit second adaptateur (31) au second bras arrière (10b).

12. Patte de bras arrière suivant la revendication 11 **caractérisée en ce que** lesdits moyens de fixation consistent en au moins deux trous taraudés pratiqués dans le fond du second évidement (33) et au moins deux trous traversant (35) pratiqués dans le second adaptateur (31) et aptes à recevoir des vis (36) destinées à coopérer avec lesdits trous taraudés.

13. Patte de bras arrière suivant la revendication 12 **caractérisée en ce que** les bords des trous traversant (35) comportent un chanfrein.

14. Bras arrière destiné à un véhicule tel qu'une bicyclette, une moto ou analogue, comprenant au moins une patte de bras (14) arrière selon l'une quelconque des revendications 1 à 13.

15. Cadre (1) de bicyclette ou analogue comportant au moins un tube de selle (2), un tube oblique (3), au moins un bras arrière (10) apte à porter une roue dite motrice et au moins une patte de bras arrière (14) selon l'une quelconque des revendications 1 à 13.
